# FASCICULE DE BREVET EUROPEEN

(11) **EP 1 366 987 B1**
(45) Date de publication et mention de la délivrance du brevet: **13.10.2004**
(21) Numéro de dépôt: 03291290.9
(22) Date de dépôt: 28.05.2003
(51) Int. Cl.: B64D 11/06, B60N 2/34, B60N 2/46, A47C 17/18

(54) **Siège transformable en couchette à accoudoir déformable**
In ein Bett verwandelbarer Sitz mit verformbarer Armlehne
Seat convertible into bed having a deformable armrest

(30) Priorité: 31.05.2002 FR 0206739
(43) Date de publication de la demande: 03.12.2003
(73) Titulaire: Société Industrielle et Commerciale de Matériel Aéronautique, F-36100 Issoudun (FR)
(72) Inventeur: Ligonnière, Laurent, 36260 Poncet la Ville (FR)
(74) Mandataire: Geismar, Thierry

(56) Documents cités:
- EP-A- 0 982 226
- DE-B- 1 086 130
- FR-A- 2 707 569
- US-A- 5 040 253
- PATENT ABSTRACTS OF JAPAN vol. 007, no. 071 (M-202), 24 mars 1983 (1983-03-24) -& JP 58 000427 A (IKEDA BUTSUSAN KK), 5 janvier 1983 (1983-01-05)

## Description

L'invention concerne un siège transformable en couchette à accoudoir déformable, et plus particulièrement un tel siège pour véhicule tel qu'un aéronef comprenant une structure d'assise et une structure de dossier montée pivotante par rapport à la structure d'assise entre une position relevée et une position allongée, ainsi qu'une structure d'accoudoir déformable comportant un montant avant et un organe d'appui, le montant étant relié à pivot à une de ses extrémités à la partie avant de la structure de siège et à son autre extrémité à la partie avant de l'organe d'appui de sorte que la structure déformable forme un accoudoir lorsque la structure de dossier est en position relevée et que le montant et l'organe d'appui viennent dans le prolongement l'un de l'autre au niveau de la structure d'assise et de la structure de dossier lorsque cette dernière est en position allongée.

On connaît déjà un tel siège, par exemple par le document EP-A 0 982 226.

Dans ce siège connu, la partie arrière de l'organe d'appui est articulée sur la structure de dossier.

Lorsque le dossier est en position relevée, l'organe d'appui est en position haute soutenue par le montant à son extrémité avant et par le dossier à son extrémité arrière. L'autre extrémité du montant avant est reliée à la structure d'assise.

Lorsque le dossier est en position allongée, l'organe d'appui est en position basse et vient ainsi élargir localement la couchette formée par l'assise et le dossier du siège.

Cet agencement suppose toutefois que l'organe d'appui, le montant, la structure d'assise et la structure de dossier forment un parallélogramme déformable.

Ceci présente un certain nombre d'inconvénients pour le confort de l'occupant du siège, notamment dans les positions intermédiaires entre la position relevée et la position allongée.

L'invention vise à palier ces inconvénients.

Plus particulièrement, l'invention a pour but de fournir un siège transformable en couchette dont l'accoudoir vient élargir la surface de couchage lorsque le dossier est en position allongée, mais qui présente un maximum de confort pour l'occupant lorsque le dossier est en position relevée ou en position intermédiaire.

A cet effet, l'invention a pour objet un siège transformable en couchette pour véhicule tel qu'un aéronef, comprenant une structure d'assise et une structure de dossier montée pivotante par rapport à la structure d'assise entre une position relevée et une position allongée, ainsi qu'une structure déformable comportant un montant et un organe d'appui, le montant étant relié à pivot à une de ses extrémités à la partie avant de la structure d'assise et à son autre extrémité à la partie avant de l'organe d'appui de sorte que la structure déformable forme un accoudoir lorsque la structure de dossier est en position relevée et que le montant et l'organe d'appui viennent dans le prolongement l'un de l'autre au niveau de la structure d'assise et de la structure de dossier lorsque cette dernière est en position allongée, ce siège comportant une bielle reliée à pivot à une de ses extrémités à la structure d'assise et à son autre extrémité à un coulisseau, et une glissière de réception du coulisseau montée sur la structure de dossier, la partie arrière de l'organe d'appui étant reliée à pivot au coulisseau.

Ainsi, lorsque la structure de dossier est dans sa position relevée généralement verticale, le coulisseau sur lequel est articulée la partie arrière de l'organe d'appui est dans la partie basse de la glissière, la plus proche de la structure d'assise.

Lorsque la structure de dossier est progressivement amenée vers la position allongée, la bielle pivote vers le bas par rapport à la structure d'assise tandis que, simultanément, le coulisseau se déplace dans la glissière en direction de l'autre extrémité de cette dernière.

Lorsque la structure de dossier est en position allongée, le coulisseau se trouve à l'autre extrémité de la glissière, la plus éloignée de la structure d'assise.

Ainsi, la partie arrière de l'organe d'appui n'est plus liée rigidement à la structure de dossier bien que les déplacements de cette dernière par rapport à la structure d'assise commandent les déformations de la structure constituée par le montant et l'organe d'appui.

Il n'est plus nécessaire que l'organe d'appui, le montant, la structure d'assise et la structure de dossier constituent un parallélogramme déformable.

Il est ainsi possible d'augmenter la longueur de l'organe d'appui tout en limitant l'encombrement total de l'accoudoir.

En outre, l'agencement selon l'invention permet de limiter la variation de hauteur entre l'organe d'appui et l'assise lorsque le dossier est en position sensiblement verticale ou légèrement inclinée.

La liaison glissière pivot entre l'organe d'appui et la structure de dossier permet donc d'améliorer la jonction entre la garniture de mousse de l'organe d'appui et celle de la structure de dossier.

Dans un mode de réalisation particulier, la glissière s'étend généralement parallèlement à la direction longitudinale de la structure de dossier.

Par direction longitudinale, on entend la direction orientée depuis la partie de la structure de dossier la plus proche de la structure d'assise vers sa partie la plus éloignée où se trouve généralement un appui-tête.

Egalement dans un mode de réalisation particulier, la glissière est sensiblement rectiligne.

Egalement dans un mode de réalisation particulier, la glissière est montée sur le côté de la structure de dossier.

On décrira maintenant à titre d'exemple non limitatif un mode de réalisation particulier de l'invention en référence aux dessins schématiques annexés dans lesquels :
- la figure 1 représente schématiquement de côté le siège transformable en position relevée de décollage ;
- la figure 2 représente schématiquement de côté le siège de la figure 1 en position de confort légèrement inclinée ;
- la figure 3 représente schématiquement de côté le siège de la figure 1 en position allongée ;
- la figure 4 est une vue en perspective du siège en position allongé ;
- la figure 5 est une représentation schématique du siège en position légèrement inclinée ;
- la figure 6 est une représentation schématique d'une variante du siège en position légèrement inclinée ;
- la figure 7 représente la variation de la hauteur H entre l'organe d'appui et la structure d'assise en fonction de l'inclinaison de la structure de dossier ;
- la figure 8 représente schématiquement un agencement selon l'art antérieur de l'organe d'appui, du montant, de la structure d'assise et de la structure de dossier constituant un parallélogramme déformable ;
- la figure 9 représente schématiquement un agencement selon l'invention de l'organe d'appui, du montant, de la structure d'assise et de la structure de dossier constituant une structure déformable ;
- les figures 10a, 10b et 10c représentent schématiquement l'extrémité de l'organe d'appui et de la structure de dossier d'un siège comportant une structure parallélogramme de l'art antérieur ;
- les figures 11a, 11b, 11c représentent schématiquement l'extrémité de l'organe d'appui et de la structure de dossier d'un siège selon l'invention ;
- la figure 12 représente une vue en perspective d'un siège, selon une réalisation, avec une tablette intégrée à la structure déformable, la tablette étant en position d'utilisation au dessus de la structure d'assise ;
- la figure 13 représente une vue en perspective du siège, la tablette étant en position intermédiaire entre la position d'utilisation et une position de rangement ;
- la figure 14 représente une vue en perspective du siège, la tablette étant en position de rangement dans la structure déformable.

Le siège transformable en couchette comprend :
- une structure d'assise 1 ;
- une structure de dossier 2 ;
- une structure déformable 3.

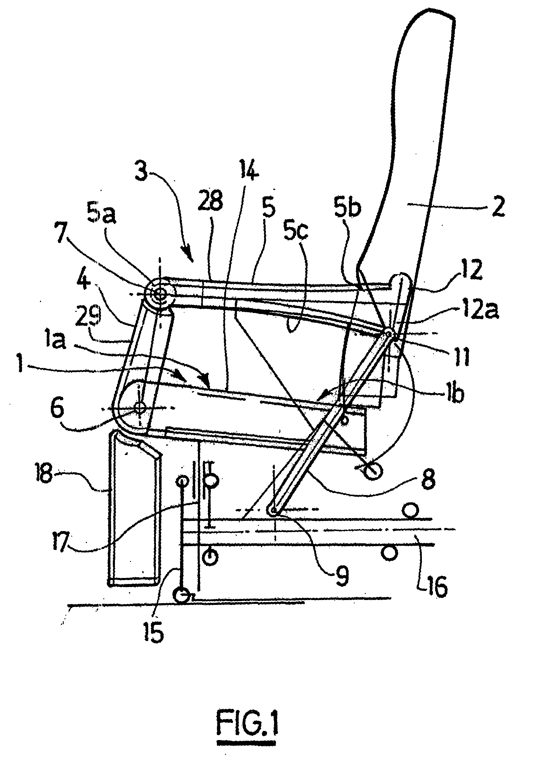

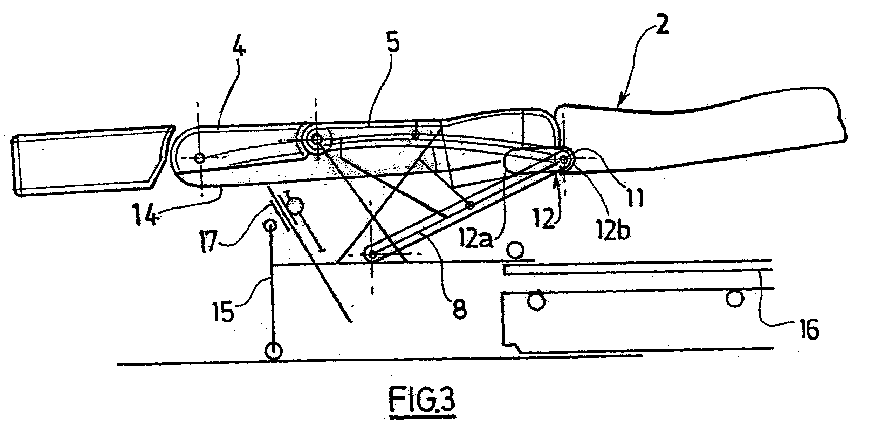

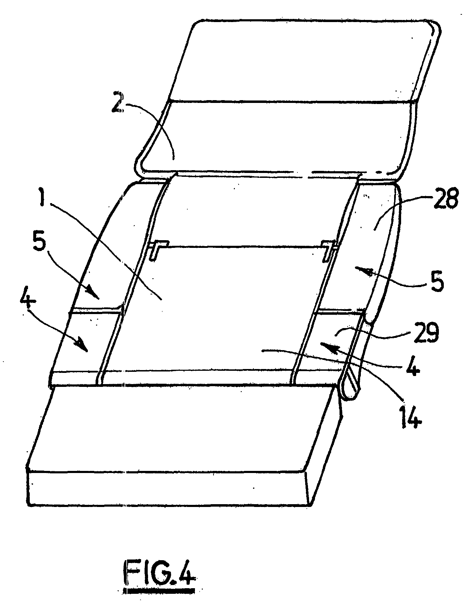

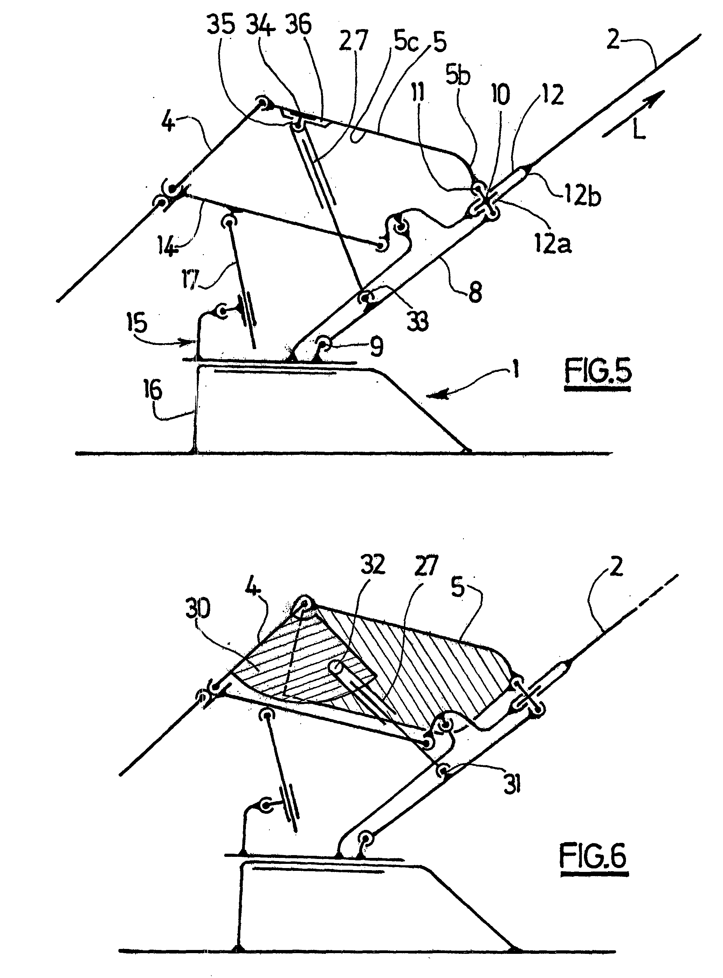

La structure de dossier 2 est montée pivotante par rapport à la structure d'assise 1 entre une position relevée de décollage représentée figures 1, 5, et une position allongée où le siège forme couchette représentée figures 3 et 4.

La structure déformable 3 comprend un montant 4 et un organe d'appui 5.

On définit les parties avant 1a, 5a respectivement de la structure d'assise 1 et de l'organe d'appui 5, les parties opposées à la structure de dossier 2. Les parties arrières 1b, 5b respectivement de la structure d'assise 1 et de l'organe d'appui 5, sont situées du côté de la structure de dossier 2.

Dans le mode de réalisation représenté, la structure d'assise 1 comprend une assise 14 reliée à un support d'assise 15.

La structure de dossier 2 est montée à pivot sur le support d'assise 15.

Le support d'assise 15 est monté mobile en translation sur un support 16 fixe.

Cette liaison est par exemple réalisée par un système de glissières (non représentées) disposées respectivement sur le support fixe 16 et le support d'assise 15 dans un plan sensiblement horizontal suivant une direction sensiblement perpendiculaire au plan de la structure de dossier 2 en position verticale

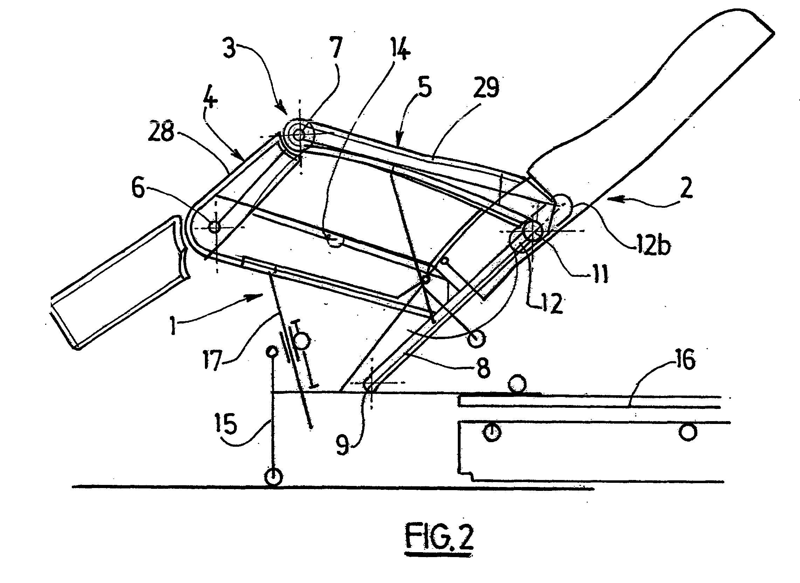

L'assise 14 peut être inclinée par rapport au support d'assise 15, notamment lorsque le dossier est en position inclinée (figure 2).

Cette inclinaison est par exemple réalisée au moyen d'un vérin 17 disposé entre le support d'assise 15 et la partie avant de l'assise 14.

Un repose jambes 18 peut être prévu, monté à pivot à l'extrémité avant de l'assise 14.

La structure de l'accoudoir déformable 3 est maintenant décrite en détail.

Le montant 4 est relié à une de ses extrémités à la partie avant 1 a de la structure d'assise 1 par une liaison pivot 6 et à son autre extrémité à la partie avant 5a de l'organe d'appui 5 par une liaison pivot 7.

Le montant 4 forme ainsi un accoudoir inférieur et l'organe d'appui 5 forme un accoudoir supérieur.

Le siège comporte par ailleurs une bielle 8 reliée à une de ses extrémités à la structure d'assise 1 par une liaison pivot 9 et à son autre extrémité à un coulisseau 10 par une liaison pivot 11.

La liaison pivot 9 est située dans la partie basse de la structure d'assise 1, longitudinalement vers le milieu de cette dernière, de sorte que la bielle 8 est orientée généralement depuis la liaison 9, vers le haut et vers l'arrière en direction de la liaison 11.

Une glissière de réception 12 du coulisseau 10 est prévue. Elle est montée sur la structure de dossier 2, la partie arrière 5b de l'organe d'appui 5 étant reliée au coulisseau 10 par la liaison pivot 11 (figure 5).

Ainsi, la structure déformable 3 forme un accoudoir lorsque la structure de dossier 2 est en position relevée (figures 1, 5). Le montant 4 et l'organe d'appui 5 viennent dans le prolongement l'un de l'autre au niveau de la structure d'assise 1 et de la structure de dossier 2 lorsque cette dernière est en position allongée (figures 3, 4), de sorte que la largeur de la couchette est augmentée.

Lorsque la structure de siège est dans la position relevée, le dossier 2 étant presque vertical, le coulisseau 10 sur lequel est articulée la partie arrière 5b de l'organe d'appui 5 se situe dans la partie basse 12a de la glissière, à proximité de la structure d'assise 1 (figures 1, 5).

Lorsque la structure de dossier 2 est progressivement amenée de la position relevée vers la position allongée, la bielle 8 pivote vers le bas et vers l'arrière par rapport à la structure d'assise 1 tandis que, simultanément, le coulisseau 10 se déplace dans la glissière 12 en direction de l'autre extrémité 12b de cette dernière (figure 2).

Lorsque la structure de dossier 2 est en position allongée, le coulisseau 10 se trouve à l'autre extrémité 12b de la glissière, à distance de la structure d'assise 1 (figure 3).

Dans le mode de réalisation représenté sur les figures, la glissière 12 s'étend parallèlement à la direction longitudinale L de la structure de dossier 2.

La direction longitudinale L est symbolisée par une flèche sur la figure 5.

Dans ce mode de réalisation, la glissière 12 est sensiblement rectiligne et montée sur le côté 13 de la structure de dossier 2.

Dans le mode de réalisation représenté sur les figures, le montant 4 et l'organe d'appui 5 comprennent respectivement des surfaces d'appui planes 28 et 29 sensiblement horizontales lorsque le siège est en position allongée. Lorsque le siège est en position allongée, les surfaces 28 et 29 viennent alors en prolongation de l'assise 14.

Lorsque le dossier est en position relevée, la surface plane d'appui 29 est sensiblement horizontale.

Chaque surface 28, 29 est fixée à un élément 30a, 30b, sensiblement plan, par exemple en forme de plaque, s'étendant dans une direction sensiblement perpendiculaire au plan des surfaces 28, 29. Ces éléments 30a, 30b sont destinés à supporter l'habillage de la structure déformable 3 (figure 6).

Les éléments 30a, 30b sont disposés dans des plans sensiblement verticaux parallèles et légèrement décalés l'un par rapport à l'autre, de sorte que l'élément 30a solidaire du montant 4 est superposé à l'élément 30b solidaire de l'organe d'appui 5 lorsque la structure de dossier 2 est en position relevée (figure 6), l'élément 30a solidaire du montant 4 étant situé dans la prolongation de l'élément 30b solidaire de l'organe d'appui 5 lorsque la structure de dossier 2 est en position allongée. Les éléments 30a, 30b glissent ainsi l'un sur l'autre à la manière d'un éventail.

L'élément 30b relié à l'organe d'appui 5 est par exemple de forme sensiblement rectangulaire, l'élément 30a relié au montant 4 étant en forme de quart de disque dont le rayon est sensiblement identique à la hauteur de l'élément 30b.

Dans le mode de réalisation représenté sur les figures 5 et 6, un vérin 27 est prévu, dont une extrémité est reliée à la bielle 8 par une liaison pivot et dont l'autre extrémité est reliée à la structure déformable 3. Ce vérin 27 est destiné à faciliter le mouvement du dossier et/ou de l'organe d'appui 5 lorsque le dossier passe de la position allongée à la position relevée.

Dans le mode de réalisation représenté figure 6, le vérin 27 est relié à une de ses extrémités à la bielle 8 par une liaison pivot 31 et au montant 4 par une liaison pivot 32.

La liaison pivot 31 est située sensiblement au milieu de la bielle 8. La liaison pivot 32 est située sur l'élément 30a du montant 4.

Dans le mode de réalisation représenté sur la figure 5, le vérin 27 est relié à une de ses extrémités à la bielle 8 par une liaison pivot 33 située du côté opposé à l'organe d'appui 5 et à son autre extrémité à un coulisseau 34 par une liaison pivot 35.

La liaison pivot 33 est située dans la partie inférieure de la bielle 8, à proximité de la liaison pivot 9.

Une glissière de réception 36 du coulisseau 32 est prévue. Elle est montée sur l'organe d'appui 5 sur la face interne 5c de ce dernier, située à l'opposé de la surface d'appui 29. La glissière 36 peut être disposée dans un logement prévu à cet effet.

La glissière 36, sensiblement rectiligne, s'étend parallèlement à la direction longitudinale de l'organe d'appui 5.

Lorsque la structure de dossier 2 est en position relevée, le coulisseau 34 se situe sensiblement au milieu de la glissière 36.

Lorsque la structure de dossier 2 est en position allongée, le coulisseau 34 est en butée à l'extrémité de la glissière 36 située à proximité du montant 4.

Lorsque la structure de dossier 2 se déplace de la position allongée vers la position relevée, le coulisseau 34 reste en butée à l'extrémité de la glissière 36 située à proximité du montant 4 de sorte que si le vérin 27 est actionné, il va favoriser le relèvement de l'organe d'appui 5.

Une telle liaison glissière pivot entre l'organe d'appui 5 et le vérin 27 permet de réduire les contraintes appliquées au vérin lorsque la structure de dossier 2 est en position relevée.

Ainsi, l'agencement selon l'invention de l'organe d'appui 5 et du montant 4 constitue une structure déformable, ce qui permet de limiter la variation de hauteur entre l'organe d'appui et l'assise lorsque le dossier est en position sensiblement verticale ou légèrement inclinée par rapport à un agencement en parallélogramme de l'art antérieur.

Lorsque la structure de dossier est déplacée d'une position proche de la position inclinée à la position allongée, la hauteur entre l'organe d'appui et la structure d'assise diminue rapidement améliorant le confort du passager grâce à l'agencement de l'invention.

Ceci est illustré par la figure 7 qui représente la variation de la hauteur H entre l'organe d'appui 5 et la structure d'assise 1 en fonction de l'angle θ entre un plan vertical et la structure de dossier 2. La courbe A de la figure 7 correspond à l'invention, la courbe B représentant la variation de la hauteur H entre l'organe d'appui et l'assise d'un agencement en parallélogramme de l'art antérieur.

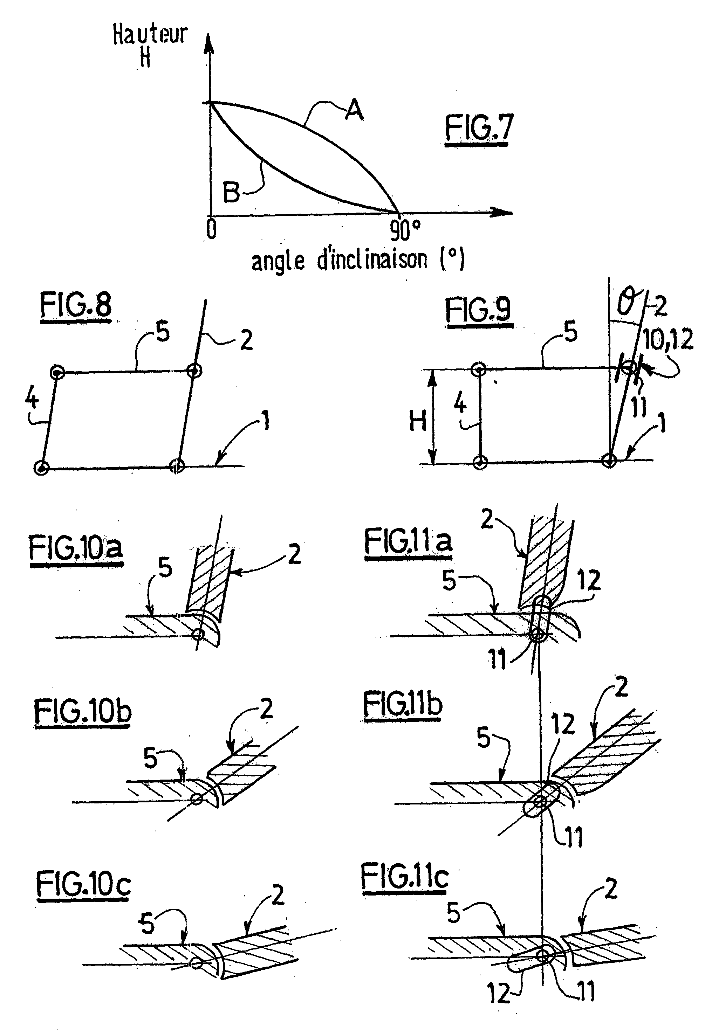

La liaison pivot de l'art antérieur entre l'organe d'appui et de la structure de dossier nécessite la réalisation de formes arrondies pour les garnitures des extrémités en regard de l'organe d'appui et de la structure de dossier respectivement, ces extrémités étant suffisamment distantes pour éviter le frottement, formant ainsi un interstice, tel que visible sur les figures 10a à 10c.

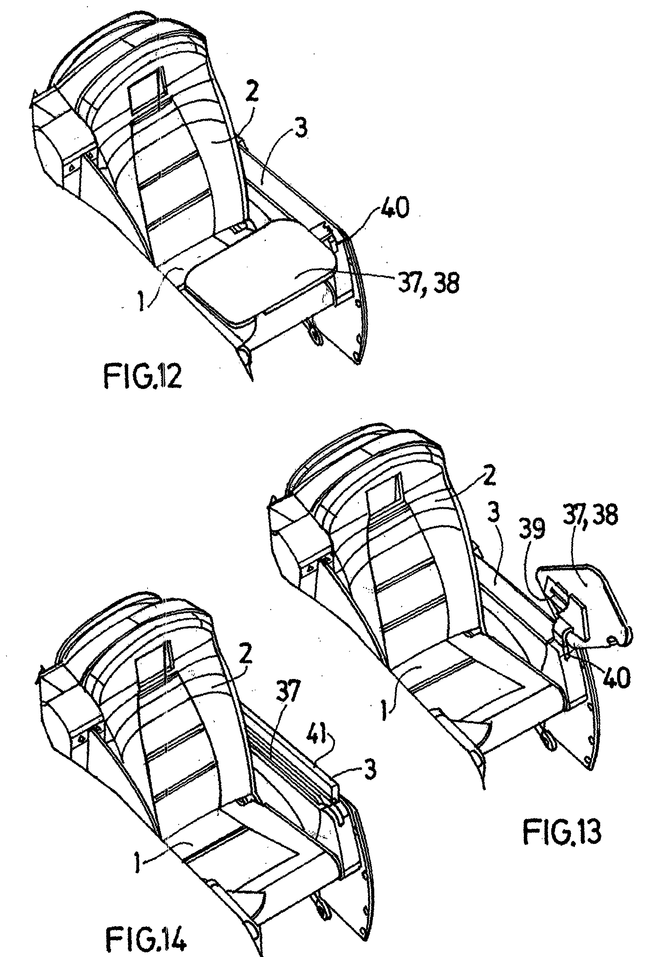

Au contraire, grâce à la liaison glissière pivot décrite dans l'invention, les garnitures des extrémités en regard peuvent présenter des faces planes qui s'ajustent parfaitement lorsque la structure de dossier est en position allongée, il n'y a alors plus d'interstice entre les garnitures d'extrémité pour un meilleur confort du passager (figures 11a à 11c).

Par ailleurs, il n'est pas nécessaire que la structure de dossier soit montée directement pivotante sur la structure d'assise. Notamment, on peut prévoir une liaison entre la structure de dossier et la structure d'assise agencée de telle sorte que les garnitures des extrémités en regard s'ajustent parfaitement quelque soit la position du siège. Ce type de liaison peut, par exemple, être réalisé par divers actionneurs commandés par une unité de commande.

Enfin, il est possible d'augmenter la longueur de l'organe d'appui tout en limitant l'encombrement total de l'accoudoir. Les figures 8 et 9 illustrent respectivement un agencement en parallélogramme de l'art antérieur et un agencement de l'invention. Pour un organe d'appui selon l'invention de longueur supérieur, l'encombrement est sensiblement identique.

Selon une réalisation, et en référence aux figures 12, 13, 14, la structure déformable 3 comprend une tablette 37.

La tablette 37 est mobile entre deux positions : une position d'utilisation (figure 12) dans laquelle la tablette 37 est placée parallèlement et au dessus de la structure d'assise 1 ; et une position de rangement (figure 14) dans laquelle la tablette 37 est placée dans le plan et à l'intérieur du parallélogramme formé par la structure déformable 3.

Entre ces deux positions, la tablette 37 est placée en position intermédiaire (figure 13) dans laquelle elle est relevée au dessus de la structure déformable 3.

La tablette 37 comprend un plateau 38 en forme de rectangle aux angles arrondis et dont la longueur est légèrement inférieure à la largeur de la structure d'assise 1. Le plateau 38 est fixé à une plaque 39 comprenant une partie en saillie montée pivotante à une première extrémité d'un bras 40. L'axe de pivotement est confondu avec celui de l'organe d'appui 5.

Le bras 40 est en partie situé dans le haut du montant 4.

En sa deuxième extrémité, il est monté pivotant par rapport au montant 4. L'axe de pivotement est confondu avec l'axe de la liaison pivot 7.

Au niveau de cette liaison pivot 7 sont prévus des moyens permettant d'empêcher le passage du siège en position allongée tant que la tablette 37 n'est pas en position de rangement.

Dans ce mode de réalisation, comme représenté sur la figure 14, l'organe d'appui 5 est pourvu sur toute sa longueur d'une partie pivotante 41 le long du bord extérieur au siège permettant de découvrir une ouverture de passage pour la tablette 37.

La tablette 37 peut ainsi pivoter autour de l'axe de la liaison pivot 7 entre la position de rangement et la position intermédiaire.

Lorsqu'elle se trouve dans la position intermédiaire, il ne reste alors qu'à faire pivoter le plateau 38 autour du bras 40 pour placer la tablette en position d'utilisation.

La position d'utilisation de la tablette 37 ne permet pas le passage de la position légèrement inclinée du siège à sa position allongée. Un système de contacteurs relié aux moteurs du siège permet de bloquer les moteurs du siège.

Le rangement de la tablette 37 permet de débloquer les moteurs, il est alors possible de mettre le siège en position allongée et dans les positions décrites précédemment.

Une structure d'accoudoir déformable selon l'invention peut être disposée de chaque côté d'un siège ou d'un seul côté seulement, l'autre côté du siège étant alors pourvu d'un accoudoir fixe par exemple.

La structure d'accoudoir déformable peut être disposée dans le prolongement du dossier et du repose jambes, tel que représenté sur la figure 4, de sorte qu'en position couchette, le siège aie la même largeur sur sensiblement toute sa longueur.

Dans un autre mode de réalisation non représenté la structure d'accoudoir n'est pas dans le prolongement et saille du bord latéral du siège.

Des moyens de commande sont prévus pour commander les différents vérins et actionneurs du siège.

## Revendications

1. Siège transformable en couchette pour véhicule tel qu'un aéronef, comprenant une structure d'assise (1) et une structure de dossier (2) montée pivotante par rapport à la structure d'assise (1) entre une position relevée et une position allongée, ainsi qu'une structure déformable (3) comportant un montant (4) et un organe d'appui (5), le montant (4) étant relié à pivot à une de ses extrémités à la partie avant (1a) de la structure d'assise (1) et à son autre extrémité à la partie avant (5b) de l'organe d'appui (5) de sorte que la structure déformable (3) forme un accoudoir lorsque la structure de dossier (2) est en position relevée et que le montant (4) et l'organe d'appui (5) viennent dans le prolongement l'un de l'autre au niveau de la structure d'assise (1) et de la structure de dossier (2) lorsque cette dernière est en position allongée, **caractérisé par le fait qu'**il comporte une bielle (8) reliée à pivot à une de ses extrémités à la structure d'assise (1) et à son autre extrémité à un coulisseau (10), et une glissière de réception (12) du coulisseau (10) montée sur la structure de dossier (2), la partie arrière (5b) de l'organe d'appui (5) étant reliée à pivot au coulisseau (10).

2. Siège selon la revendication 1, **caractérisé par le fait que** la glissière (12) s'étend généralement parallèlement à la direction longitudinale de la structure de dossier (2).

3. Siège selon l'une quelconque des revendications 1 et 2, **caractérisé par le fait que** la glissière (12) est sensiblement rectiligne.

4. Siège selon l'une quelconque des revendications 1 à 3, **caractérisé par le fait que** la glissière (12) est montée sur le côté de la structure de dossier (2).

5. Siège selon l'une quelconque des revendications 1 à 4, **caractérisé en ce que** la structure d'assise (1) comprend une assise (14) reliée à un support d'assise (15) et inclinable par rapport à celui-ci, et **en ce que** l'extrémité de la bielle (8) est reliée à pivot sur le support d'assise (15) de la structure d'assise (1).

6. Siège selon la revendication 5, **caractérisé en ce que** le support d'assise (15) est fixé mobile en translation sur un support fixe (16), la structure de dossier (2) étant reliée à pivot au support d'assise (15).

7. Siège selon l'une quelconque des revendications 1 à 6, **caractérisé en ce qu'**il comprend un vérin (27) dont une extrémité est reliée à la bielle (8) et dont l'autre extrémité est reliée à la structure déformable (3).

8. Siège selon la revendication 7, **caractérisé en ce que** l'une des extrémités du vérin (27) est reliée à la bielle (8) par une liaison pivot (31) située sensiblement au milieu de la bielle (8), l'autre extrémité du vérin (27) étant reliée au montant (4) par une liaison pivot (32).

9. Siège selon la revendication 7, **caractérisé en ce que** l'une des extrémités du vérin (27) est reliée à la bielle (8) par une liaison pivot (33) située dans la partie de la bielle (8) opposée à l'organe d'appui (5), l'autre extrémité du vérin (27) étant reliée à un coulisseau (34) par une liaison pivot (35), une glissière de réception (36) du coulisseau (34) étant montée sur l'organe d'appui (5).

10. Siège selon l'une quelconque des revendications 1 à 9, caractérisé en ce le montant (4) et l'organe d'appui (5) comprennent respectivement des surfaces d'appui planes (28) et (29) sensiblement horizontales lorsque le siège est en position allongée, chaque surface d'appui (28), (29) étant fixée à un élément (30b, 30a), sensiblement plan, s'étendant dans une direction sensiblement perpendiculaire au plan des surfaces d'appui (28), (29), l'élément (30a) solidaire du montant (4) étant superposé à l'élément (30b) solidaire de l'organe d'appui (5) lorsque la structure de dossier (2) est en position relevée, l'élément (30a) solidaire du montant (4) étant situé dans la prolongation de l'élément (30b) solidaire de l'organe d'appui (5) lorsque la structure de dossier (2) est en position allongée.

11. Siège selon l'une quelconque des revendications 1 à 10, **caractérisé en ce qu'**il comprend une tablette (37) mobile entre une position d'utilisation dans laquelle elle est située parallèlement et au dessus de la structure d'assise (1 ) et une position de rangement dans laquelle elle est située à l'intérieur du parallélogramme formé par la structure déformable (3).

12. Siège selon la revendication 11, **caractérisé en ce que** la tablette (37) est mobile selon un axe de pivotement confondu avec l'axe de la liaison pivot entre le montant (4) et l'organe d'appui (5) et selon un axe de pivotement perpendiculaire au précédent et parallèle à l'organe d'appui (5).

13. Siège selon l'une des revendications 11 à 12, caractérisé en ce la tablette est pourvue de moyens de blocage du siège de sorte que le siège peut passer en position allongée seulement si la tablette est en position de rangement.

## Patentansprüche

1. In eine Liege verwandelbarer Sitz für ein Fahrzeug wie beispielsweise ein Luftfahrzeug, mit einer Sitzflächenstruktur (1) und einer Rückenlehnenstruktur (2), die in Bezug auf die Sitzflächenstruktur (1) zwischen einer hochgeklappten Position und einer liegenden Position schwenkbar montiert ist, sowie einer verformbaren Struktur (3) mit einem Ständer (4) und einem Stützorgan (5), wobei der Ständer (4) schwenkbar mit einem seiner Enden mit dem vorderen Teil (1a) der Sitzflächenstruktur (1) und mit seinem anderen Ende mit dem vorderen Teil (5b) des Stützorgans (5) verbunden ist, so dass die verformbare Struktur (3) eine Armlehne bildet, wenn sich die Sitzflächenstruktur (2) in hochgeklappter Position befindet und der Ständer (4) sowie das Stützorgan (5) sich gegenseitig in Höhe der Sitzflächenstruktur (1) und der Rückenlehnenstruktur (2) verlängern, wenn sich die letztere in liegender Position befindet, **dadurch gekennzeichnet, dass** er eine Stange (8) umfasst, die schwenkbar mit einem ihrer Enden mit der Sitzflächenstruktur (1) und mit ihrem anderen Ende mit einem Schieber (10) verbunden ist, sowie eine an der Rückenlehnenstruktur (2) montierte Aufnahmegleitschiene (12) für den Schieber (10), wobei das rückseitige Teil (5b) des Stützorgans (5) schwenkbar mit dem Schieber (10) verbunden ist.

2. Sitz nach Anspruch 1, **dadurch gekennzeichnet, dass** sich die Gleitschiene (12) im wesentlichen parallel zur Längsrichtung der Rückenlehnenstruktur (2) erstreckt.

3. Sitz nach einem der Ansprüche 1 und 2, **dadurch gekennzeichnet, dass** die Gleitschiene (12) etwa geradlinig ist.

4. Sitz nach einem der Ansprüche 1 bis 3, **dadurch gekennzeichnet, dass** die Gleitschiene (12) an der Seite der Rückenlehnenstruktur (2) montiert ist.

5. Sitz nach einem der Ansprüche 1 bis 4, **dadurch gekennzeichnet, dass** die Sitzflächenstruktur (1) eine Sitzfläche (14) umfasst, die mit einem Sitzflächenträger (15) verbunden und in Bezug auf diesen schrägstellbar ist, und dass das Ende der Stange (8) schwenkbar mit dem Sitzflächenträger (15) der Sitzflächenstruktur (1) verbunden ist.

6. Sitz nach Anspruch 5, **dadurch gekennzeichnet, dass** der Sitzflächenträger (15) in Querrichtung mobil an einem festen Träger (16) befestigt ist, wobei die Rückenlehnenstruktur (2) schwenkbar mit dem Sitzflächenträger (15) verbunden ist.

7. Sitz nach einem der Ansprüche 1 bis 6, **dadurch gekennzeichnet, dass** er einen Zylinder (27) umfasst, dessen eines Ende mit der Stange (8) verbunden ist und dessen anderes Ende mit der verformbaren Struktur (3) verbunden ist.

8. Sitz nach Anspruch 7, **dadurch gekennzeichnet, dass** eines der Enden des Zylinders (27) über eine etwa in der Mitte der Stange (8) angeordnete Schwenkverbindung (31) mit der Stange (8) verbunden ist, wobei das andere Ende des Zylinders (27) über eine Schwenkverbindung (32) mit dem Ständer (4) verbunden ist.

9. Sitz nach Anspruch 7, **dadurch gekennzeichnet, dass** eines der Enden des Zylinders (27) über eine in dem von dem Stützorgan (5) abgewandten Teil der Stange (8) angeordnete Schwenkverbindung (33) mit der Stange (8) verbunden ist, wobei das andere Ende des Zylinders (27) über eine Schwenkverbindung (35) mit einem Schieber (34) verbunden ist, wobei eine Aufnahmegleitschiene (36) für den Schieber (34) am Stützorgan (5) montiert ist.

10. Sitz nach einem der Ansprüche 1 bis 9, **dadurch gekennzeichnet, dass** der Ständer (4) und das Stützorgan (5) jeweils plane Stützflächen (28) und (29) aufweisen, die etwa horizontal verlaufen, wenn sich der Sitz in liegender Position befindet, wobei jede Stützfläche (28), (29) an einem etwa planen Element (30b, 30a) befestigt ist, das sich in einer zur Ebene der Stützflächen (28), (29) etwa lotrecht verlaufenden Richtung erstreckt, wobei sich das zum Ständer (4) gehörige Element (30a) über dem zum Stützorgan (5) gehörigen Element (30b) befindet, wenn die Rückenlehnenstruktur (2) in hochgeklappter Position ist, wobei das zum Ständer (4) gehörige Element (30a) in der Verlängerung des zum Stützorgan (5) gehörigen Elements (30b) liegt, wenn sich die Rückenlehnenstruktur (2) in liegender Position befindet.

11. Sitz nach einem der Ansprüche 1 bis 10, **dadurch gekennzeichnet, dass** er ein Tablett (37) umfasst, das mobil ist zwischen einer Benutzungsposition, in der es sich parallel und über der Sitzflächenstruktur (1) befindet, und einer hochgeklappten Position, in der es sich innerhalb des von der verformbaren Struktur (3) gebildeten Parallelogramms befindet.

12. Sitz nach Anspruch 11, **dadurch gekennzeichnet, dass** das Tablett (37) mobil ist nach einer in die Achse der Schwenkverbindung zwischen dem Ständer (4) und dem Stützorgan (5) übergehenden Schwenkachse und nach einer lotrecht zur vorherigen und parallel zum Stützorgan (5) verlaufenden Schwenkachse.

13. Sitz nach einem der Ansprüche 11 bis 12, **dadurch gekennzeichnet, dass** das Tablett mit Arretiermitteln für den Sitz ausgestattet ist, so dass der Sitz nur dann in die liegende Position gebracht werden kann, wenn sich das Tablett in hochgeklappter Position befindet.

## Claims

1. A seat convertible into a bed for a vehicle such as an aircraft, comprising a squab structure (1) and a back rest structure (2) mounted so as to pivot with respect to the squab structure (1) between a raised position and an elongated position, as well as a deformable structure (3) comprising an upright (4) and a support member (5), the upright (4) being connected pivotally at one of its ends on the front part (1a) of the squab structure (1) and at its other end on the front part (5b) of the support member (5) so that the deformable structure (3) forms an arm rest when the back rest structure (2) is in the raised position and the upright (4) and support member (5) come in line with each other level with the squab structure (1) and the back rest structure (2) when the latter is in the elongated position, **characterised by** the fact that it comprises a link (8) pivotally connected at one of its ends to the squab structure (1) and at its other end to a slide (10), and a runner (12) receiving the slide (10) mounted on the back rest structure (2), the rear part (5b) of the support member (5) being pivotally connected to the slide (10).

2. A seat according to Claim 1, **characterised by** the fact that the runner (12) extends generally parallel to the longitudinal direction of the back rest structure (2).

3. A seat according to either one of Claims 1 and 2, **characterised by** the fact that the runner (12) is substantially rectilinear.

4. A seat according to any one of Claims 1 to 3, **characterised by** the fact that the runner (12) is mounted on the side of the back rest structure (2).

5. A seat according to any one of Claims 1 to 4, **characterised in that** the squab structure (1) comprises a squab (14) connected to a squab support (15) and inclinable with respect to it, and **in that** the end of the link (8) is pivotally connected to the squab support (15) of the squab structure (1).

6. A seat according to Claim 5, **characterised in that** the squab support (15) is fixed so as to be able to move in translation on a fixed support (16), the back rest structure (2) being pivotally connected to the squab support (15).

7. A seat according to any one of Claims 1 to 6, **characterised in that** it comprises a cylinder (27), one end of which is connected to the link (8) and the other end of which is connected to the deformable structure (3).

8. A seat according to Claim 7, **characterised in that** one of the ends of the cylinder (27) is connected to the link (8) by a pivot connection (31) situated substantially at the middle of the link (8), the other end of the cylinder (27) being connected to the upright (4) by a pivot connection (32).

9. A seat according to Claim 7, **characterised in that** one of the ends of the cylinder (27) is connected to the link (8) by a pivot connection (33) situated in the part of the link (8) opposite to the support member (5), the other end of the cylinder (27) being connected to a slide (34) by a pivot connection (35), a runner (36) for receiving the slide (34) being mounted on the support member (5).

10. A seat according to any one of Claims 1 to 9, **characterised in that** the upright (4) and the support member (5) comprise respectively flat support surfaces (28) and (29) substantially horizontal when the seat is in the elongated position, each support surface (28), (29) being fixed to a substantially flat element (30b, 30a), extending in a direction substantially perpendicular to the plane of the support surfaces (28), (29), the element (30a) fixed to the upright (4) being superimposed on the element (30b) fixed to the support member (5) when the back rest structure (2) is in the raised position, the element (30a) fixed to the upright (4) being situated in line with the element (30b) fixed to the support member (5) when the back rest structure (2) is in the elongated position.

11. A seat according to any one of Claims 1 to 10, **characterised in that** it comprises a tray (37) movable between a position of use in which it is situated parallel to and above the squab structure (1) and a storage position in which it is situated inside the parallelogram formed by the deformable structure (3).

12. A seat according to Claim 11, **characterised in that** the tray (37) is movable along a pivot axis merged with the axis of the pivot connection between the upright (4) and the support member (5) and along a pivot axis perpendicular to the previous one and parallel to the support member (5).

13. A seat according to one of Claims 11 to 12, **characterised in that** the tray is provided with means of locking the seat so that the seat can move into the elongated position only if the tray is in the storage position.
